# EUROPEAN PATENT SPECIFICATION

(11) **EP 3 297 225 B1**
(45) Date of publication and mention of the grant of the patent: **27.01.2021**
(21) Application number: 16810756.3
(22) Date of filing: 09.03.2016
(51) Int. Cl.: H04L 12/711, H04L 12/703, H04L 12/24

(54) **METHOD AND APPARATUS FOR PROTECTING ACTIVE AND STANDBY ACCESS NETWORK ELEMENTS IN DATA COMMUNICATIONS NETWORK**
VERFAHREN UND VORRICHTUNG ZUM SCHUTZ VON AKTIVEN UND STANDBY-ZUGANGSNETZELEMENTEN IN EINEM DATENKOMMUNIKATIONSNETZWERK
PROCÉDÉ ET APPAREIL DE PROTECTION D'ÉLÉMENTS DE RÉSEAU D'ACCÈS ACTIF ET DE RÉSERVE DANS UN RÉSEAU DE COMMUNICATIONS DE DONNÉES

(30) Priority: 15.06.2015 CN 201510328922
(43) Date of publication of application: 21.03.2018
(73) Proprietor: ZTE Corporation, Shenzhen, Guangdong 518057 (CN)
(72) Inventor: WANG, Hao, Shenzhen Guangdong 518057 (CN)
(74) Representative: Petraz, Davide Luigi
(86) International application number: PCT/CN2016/075993
(87) International publication number: WO 2016/202015

(56) References cited:
- CN-A- 101 924 654
- CN-A- 102 427 385
- CN-A- 103 368 712
- US-A1- 2013 016 606
- US-A1- 2014 321 269

## Description

### Technical Field

This document relates to, but is not limited to, the field of communication technologies, and more particularly, to a method and apparatus for protecting master and slave access network elements in a data communication network (DCN).

### Background

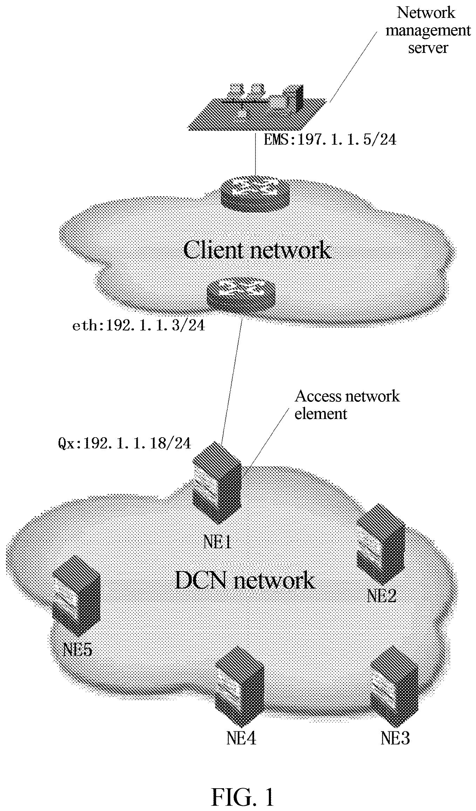

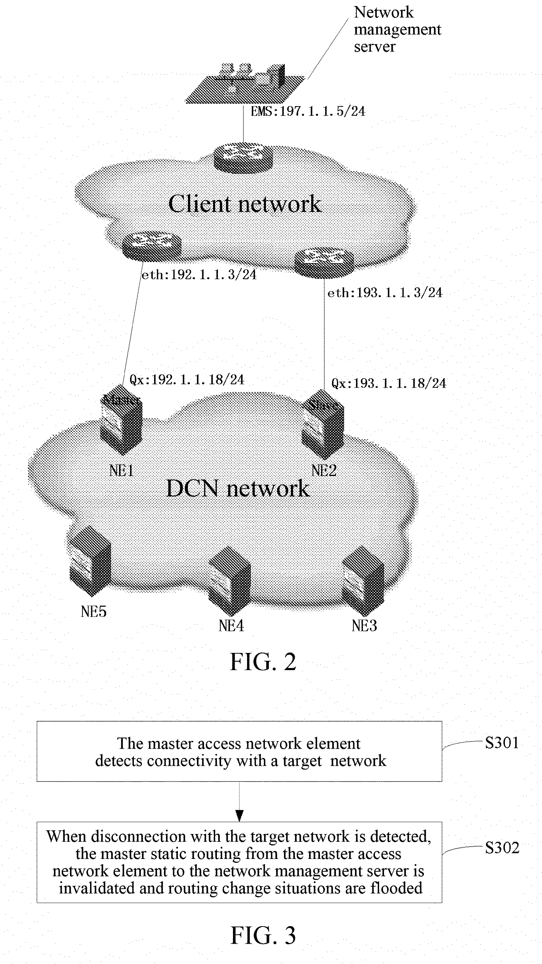

In a packet transport network (PTN), an element management server needs to manage the entire PTN, typically hundreds of network elements, in most cases. It is very difficult to establish linkage between all of the network elements and the element management server directly. All of the network elements in the entire network can be managed through one or more access network elements using the DCN technology. FIG. 1 describes a typical DCN networking situation in the related art, i.e., the element management server (EMS) manages the entire PTN through a client network using an access network element method. For a network in which there is only one access network element (NE), once the access network element goes wrong or there is something wrong with the client network associated with the access network element, this will result in failure of the entire DCN channel and the network element breaking off from control, causing serious influence. Thus, protection is considered to be performed through a plurality of network elements to ensure that upon failure of a DCN channel in which a master access network element is located, a DCN channel in which a slave access network element is located can be switched to, such that internal network elements of the DCN can communicate with the network management server through the slave access network element. A networking method in the related art can be seen in FIG. 2, in which NE1 is a master access network element and NE2 is a slave access network element.

At present, the protection for the DCN channel usually is implemented by the slave access network element sending messages to the master access network element periodically. However, such protection manner may cause mistaken switching due to failure in the channel between the master access network element and the slave access network element, and there is no automatic change-over mechanism in the event of normal recovery of the master access network element.

The features of the preamble of the independent claims are known from US 2013/0016606 A1.

### Summary

The present invention is defined in the independent claims. The dependent claims define particular embodiments of the invention. The following is a summary of the subject matter described herein in detail. This summary is not intended to limit the protection scope of the claims.

Embodiments of the present invention provide a method and apparatus for protecting master and slave access network elements in a data communication network according to appended independent claims, to avoid switching vulnerability of the master and slave access network elements and guarantee the stability of network management. Further improvements and embodiments are provided in the dependent claims.

Also provided is a method for protecting master and slave access network elements in a data communication network, including:
the master access network element detects connectivity between the master access network element and a target network; and when detecting that the master access network element is not connected with the target network, invalidates master static routing from the master access network element to a network management server and floods routing change situations.

In an exemplary embodiment, the method further includes:
the master access network element detects whether the connectivity between the master access network element and the target network is recovered; and when detecting that the connectivity between the master access network element and the target network is recovered, validates the master static routing from the master access network element to the network management server and floods the routing change situations.

In an exemplary embodiment, in the method,
invalidating the master static routing from the master access network element to the network management server includes deleting the master static routing in a forwarding table maintained by the master access network element or setting a priority of the master static routing to be lower than a priority of a slave static routing from the slave access network element to the network management server; and
validating the master static routing from the master access network element to the network management server includes reconfiguring the master static routing into the forwarding table or setting the priority of the master static routing in the forwarding table to be higher than the priority of the slave static routing.

In an exemplary embodiment, in the method, the master access network element detecting the connectivity between the master access network element and the target network includes that the master access network element detects the connectivity to the target network through a preconfigured ping detection function.

Also provided is a method for protecting master and slave access network elements in a data communication network, including:
an internal network element detects whether a master static routing from a master access network element to a network management server is invalid; and
when it is detected that the master static routing is invalid, the internal network element re-performs routing calculation, and completes switching from the master static routing to a slave static routing; herein the slave static routing is routing information from the slave network element to the network management server learned by the internal network element in advance.

In an exemplary embodiment, the method further includes:
when the internal network element detects that the master static routing is recovered to be valid, the internal network element re-performs routing calculation and completes switching from the slave static routing to the master static routing.

In an exemplary embodiment, in the method,
switching from the slave static routing to the master static routing includes deleting the master static routing in a forwarding table maintained by the internal network element and configuring the slave static routing into the forwarding table; and
switching from the master static routing to the slave static routing includes deleting the slave static routing in the forwarding table maintained by the internal network element and configuring the master static routing into the forwarding table.

Also provided is a master access network element, including:
a first detection module configured to detect connectivity between the master access network element and a target network; and
a first protection module configured to, when the first detection module detects that the master access network element is not connected with the target network, invalidate a master static routing from the master access network element to a network management server and flood routing change situations.

In an exemplary embodiment, in the master access network element,
the first detection module is further configured to detect whether the connectivity between the master access network element and the target network is recovered; and
the first protection module is further configured to, when the first detection module detects that the connectivity between the master access network element and the target network is recovered, validate the master static routing from the master access network element to the network management server and flood the routing change situations.

Also provided is a network element, including:
a second detection module configured to detect whether a master static routing from the master access network element to a network management server is invalid; and
a second protection module configured to, when the second detection module detects that the master static routing is invalid, re-perform routing calculation, and complete switching from the master static routing to a slave static routing; herein the slave static routing is routing information from the slave network element to the network management server learned by the network element in advance.

In an exemplary embodiment, in the network element,
the second detection module is further configured to detect whether the master static routing is recovered to be valid; and
the second protection module is further configured to, when the second detection module detects that the master static routing is recovered to be valid, re-perform routing calculation and complete switching from the slave static routing to the master static routing.

The master-to-slave switching method in the scheme described above is independent of interaction between the master and slave access network elements without extra custom interfaces, and can ensure that the master access network element is used preferentially to communicate with the network management server after failure recovery of the master access network element, improving the stability of network management.

After the accompanying drawings and detailed description are read and understood, other aspects can be understood.

### Brief Description of Drawings

In order to illustrate the embodiments of the present invention or the scheme in related art more clearly, the accompanying drawings used in the embodiments or the description of the related art will be presented simply below. Obviously, the accompanying drawings in the following description are only some embodiments of the present application. People having ordinary skill in the art can further obtain other accompanying drawings from these accompanying drawings without paying creative labor.
FIG. 1 is a schematic diagram of typical networking of DCN in the related art.
FIG. 2 is a schematic diagram of networking of DCN through master and slave access network elements in the related art.
FIG. 3 is a flow chart of a method for protecting mater and slave access network elements in a data communication network in accordance with a first embodiment of the present invention.
FIG. 4 is a flow chart of a method for protecting mater and slave access network elements in a data communication network in accordance with a second embodiment of the present invention.
FIG. 5 is a master access network element detection procedure for invalidation switching of a ping detection function in accordance with a third embodiment of the present invention.
FIG. 6 is an internal network element routing switching procedure for the invalidation switching of the ping detection function in accordance with the third embodiment of the present invention.
FIG. 7 is a master access network element detection procedure for successful recovery of the ping detection function in accordance with the third embodiment of the present invention.
FIG. 8 is an internal network element routing switching procedure for successful recovery of the ping detection function in accordance with the third embodiment of the present invention.
FIG. 9 is a schematic diagram of a procedure of switching between a master access network element and a slave access network element in accordance with the third embodiment of the present invention.
FIG. 10 is a block diagram of a master access network element in accordance with a fourth embodiment of the present invention.
FIG. 11 is a block diagram of a network element in accordance with a fifth embodiment of the present invention.

### Detailed Description

The scheme in the embodiments of the present invention will be described in detail below in conjunction with the accompanying drawings and the specific embodiments. It is should be noted that the embodiments in the present application and features in the embodiments can be combined with each other arbitrarily without conflict.

The embodiments of the present invention provide a method and apparatus for protecting master and slave access network elements in a data communication network such that an abnormal situation from the master access network element to a specific network can be detected and found from a technical level, further implementing switching between the master and slave access network elements.

In the embodiments of the present invention, connectivity between the master access network element and the specific network is detected through a network diagnostic tool (such as ping) as a basis for routing switching of the internal network element. Once disconnection between the master access network element and the specific network is detected, it is considered to be a routing failure between the master access network and a network management server. Internal routing switching is completed by canceling a high level static routing from the master access network element to the network management server and validating a static routing from the slave access network element to the network management server. Subsequently, once the connectivity between the master access network element and the specific network is detected to be normal, indicating that the routing from the master access network element and the network management server is recovered, switching of internal traffic to the master access network element is implemented by reconfiguring the static routing from the master access network element to the network management server to invalidate the static routing from the slave access network element to the network management server. That is, the high level master static routing is set and cancelled according to the result of detection such that the routing from the internal network element to the network management server is switched between the master and slave access network elements to ensure the stability of network management.

The scheme provided by the embodiments of the present invention will be described below in detail through several specific embodiments.

### The first embodiment

The embodiment provides a method for protecting mater and slave access network elements in a data communication network, which is applied at the side of the master access network element and, as shown in FIG. 3, includes the following steps.

In Step S301, the master access network element detects connectivity with a target network.

In the embodiment, ways of detecting the connectivity may be, but is not limited to, configuring a ping detection function in advance in the master access network element and detecting the connectivity using the ping detection function.

In the embodiment, a target network may be a network management server, or a client DCN router port connected directly with an Ox interface of the master access network element, or any device considered by a network administrator to be detected.

When the network management server and the Ox interface are in the same network segment, the network management server can be Pinged directly.

When the Ox interface and the network management server are not in the same network segment, an address of a target network interface connected directly with the Ox interface can be Pinged, or an IP address which IP addresses of other Ox interfaces can reach can be Pinged.

In Step S302, when detecting that the master access network element is not connected with the target network, the master static routing from the master access network element to the network management server is invalidated and routing change situations are flooded.

In this step, the master static routing can be invalidated by any one of the following manners.

The first manner: the master static routing in a forwarding table maintained by the master access network element is deleted.

The second manner: a priority of the master static routing in the forwarding table maintained by the master access network element is set to be lower than a priority of the slave static routing to induce the switching between the master and slave network elements.

The method in accordance with the embodiment of the present invention may further provide a failure recovery scheme, including:
the master access network element detects periodically whether the connectivity between the master access network element and the target network is recovered; and when detecting the connectivity between the master access network element and the target network is recovered, the master static routing from the master access network element to the network management server is validated and the routing change situations are flooded.

Validating the master static routing is a reverse process of invalidation in step S302 and includes:
when the invalidation is performed using the first manner, the validation is performed by reconfiguring the master static routing into the forwarding table; and
when the invalidation is performed using the second manner, the validation is performed by modifying a low priority of the master static routing in the forwarding table to be a priority higher than that of the slave static routing.

### The second embodiment

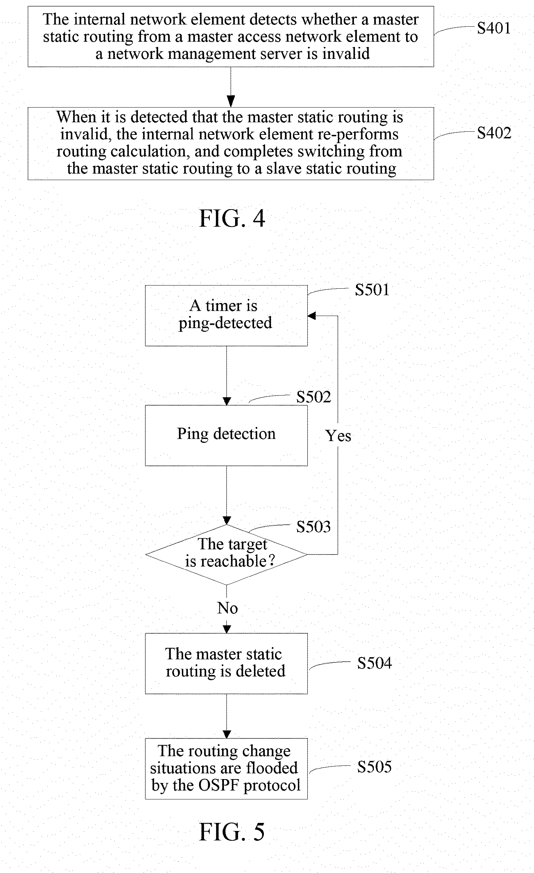

The embodiment provides a method for protecting mater and slave access network elements in a data communication network, which is applied at the side of an internal network element and, as shown in FIG. 4, includes the following steps.

In Step S401, the internal network element detects whether a master static routing from a master access network element to a network management server is invalid; and if it is detected that the master static routing is invalid, then step S402 is performed.

In Step 402, the internal network element re-performs routing calculation, and completes switching from the master static routing to a slave static routing; herein the slave static routing is routing information from the slave network element to the network management server learned by the internal network element in advance.

The method in accordance with the embodiment of the present invention may further include: when it is detected that the master static routing is recovered to be valid, the internal network element re-performs routing calculation, and completes switching from the slave static routing to the master static routing.

In the embodiment, switching from the slave static routing to the master static routing includes deleting the master static routing in the forwarding table maintained by the internal network element and configuring the slave static routing into the forwarding table; and
switching from the master static routing to the slave static routing includes deleting the slave static routing in the forwarding table maintained by the internal network element and configuring the master static routing into the forwarding table.

It is can be known from the description of the first and second embodiments that the master access network element detects connectivity between the master access network element and a specific network by pinging a specific IP address as a basis for routing switching of the internal network element. If the ping detection is abnormal, then it is believed that the communication of the network element through the master access network element to the network management server is abnormal. At this point, the internal routing switching is completed by invalidating the master static routing to the network management server to validate the slave static routing from the slave access network element to the network management server, and the traffic from the network element to the network management server is switched automatically to the slave access network element, so as to keep normal communication with the network management server. Subsequently, the master access network element still performs the ping detection periodically. Once the communication from the master access network element to the specific network is found to be recovered, the master static routing from the master access network element to the network management server is revalidated and the slave static routing from the slave access network element to the network management server is invalidated to implement the switching of the internal traffic to the master access network element.

### The third embodiment

The embodiment provides a method for protecting mater and slave access network elements in a data communication network. The embodiment will be discussed in detail in terms of two aspects, invalidation switching and successful recovery, and specific implementation process of the method of the present application can be illustrated better by disclosing more details.

Before the protection is implemented, the following configuration will be completed first.
1) A user configures the master static routing from the master access network element to the network management server on the master access network element.
2) The user configures the Ping detection function on the master access network element and starts periodic detection.
3) The user configures the slave static routing from the slave access network element to the network management server on the slave access network element.

The priority of the master static routing is high and the priority of the slave static routing is low.

After the above configurations are completed, the master access network element and the slave access network element flood the routing through an open shortest path first (OSPF) protocol. Because the priority of the master static routing is higher than that of the slave static routing, the traffics from the device to the network management server all reach the network management server from the master access network element.

As shown in FIG. 5, a master access network element detection procedure for invalidation switching of a ping detection function in accordance with the embodiment includes the following steps.

In Step S501, a ping detection timer is started.

In Step S502, if the time of the timer is reached, a ping packet is sent according to a target IP address configured in the ping function configuration.

In Step S503, it is determined whether the target IP address is reachable according to the result of ping packet; if the target IP address is reachable, step S501 is performed and the timer continues to be set for periodical detection; and if the target IP address is not reachable, step S504 is performed.

In Step S504, the master static routing is deleted.

In Step S505, the routing change situations are flooded by the OSPF protocol of the master access network element.

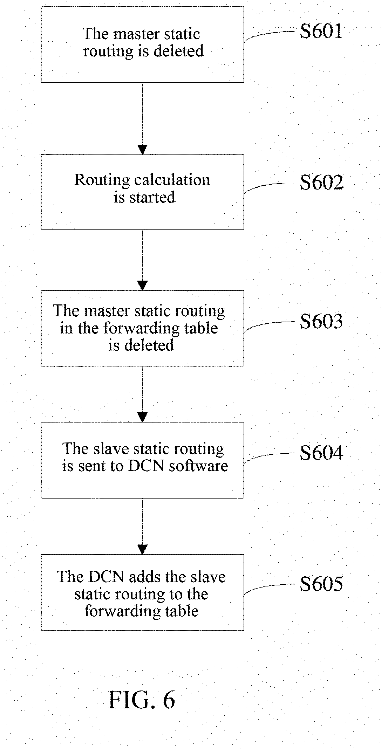

As shown in FIG. 6, an internal network element routing switching procedure for the invalidation switching of the ping detection function in accordance with the embodiment includes the following steps.

In Step S601, the internal network element detects that the master static routing is deleted through the OSPF protocol.

In Step S602, the OSPF protocol starts routing calculation.

In Step S603, the master static routing in the forwarding table is deleted.

In Step S604, the slave static routing is sent to DCN software.

In Step S605, the DCN software adds the slave static routing to the forwarding table and switches the message traffic reaching the network management server to the slave access network element.

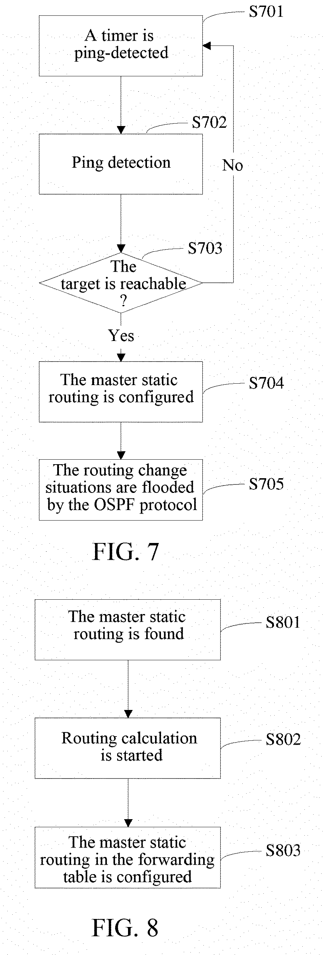

As shown in FIG. 7, a master access network element detection procedure for successful recovery of the ping detection function in accordance with the embodiment includes the following steps.

In Step S701, a ping detection timer is started.

In Step S702, if the time of the timer is reached, a ping packet is sent according to a target IP address configured in the ping function configuration.

In Step S703, it is determined whether the target IP address is reachable according to the result of ping packet; if the target IP address is reachable, step S704 is performed; and if the target IP address is not reachable, step S701 is performed.

In Step S704, the OSPF protocol configures the master static routing to the DCN module, which configures the master static routing to the forwarding table.

In Step S705, the routing change situations are flooded by the OSPF protocol.

As shown in FIG. 8, an internal network element routing switching procedure for successful recovery of the ping detection function in accordance with the embodiment includes the following steps.

In Step S801, the internal network element detects that the master static routing with high priority increases through the OSPF protocol.

In Step S802, the OSPF protocol starts routing calculation.

In Step S803, the master static routing in the forwarding table is configured and the message traffic reaching the network management server is switched to the master access network element.

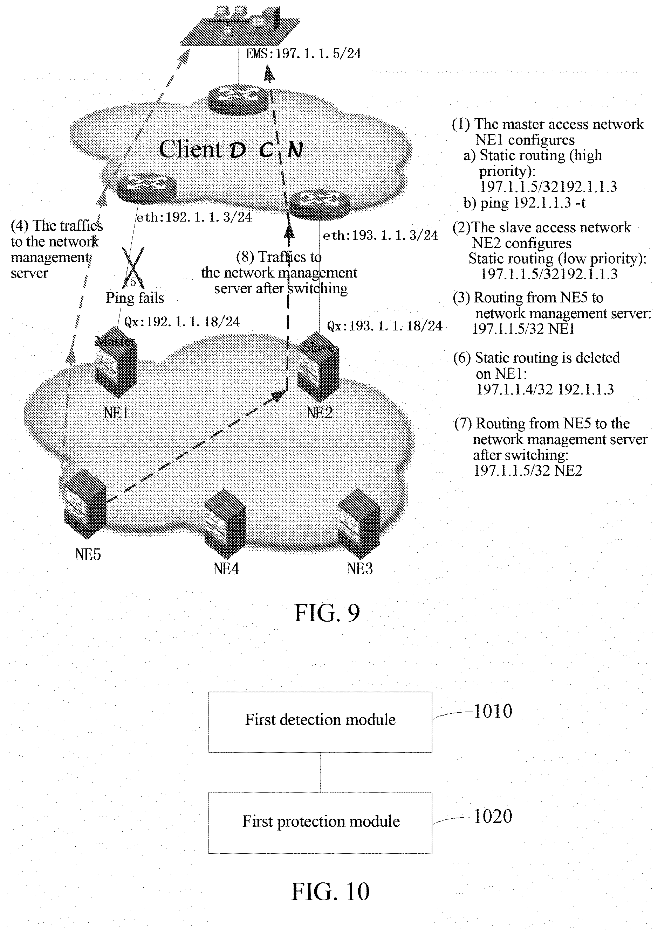

As shown in FIG. 9, FIG. 9 is a schematic diagram of a procedure of switching between the master access network element and a slave access network element in accordance with the embodiment. The procedure of switching between the master and slave access network elements will be described through specific application examples.

In Step 1, the user configures the static routing, 197.1.1.5/32 and 192.1.1.3, to the network management server on the master access network element (NE) (NE1 in FIG. 9).

In Step 2, the user configures the Ping detection function, such as ping 192.1.1.3, on the master access network element, and associates it with the static routing, 197.1.1.5/32 and 192.1.1.3, of the network management server.

In Step 3, the user configures the static routing, 197.1.1.5/32 and 192.1.1.3, to the network management server on the slave access network element (NE2 in FIG.9).

In Step 4, after the above configurations are completed, the traffics from the device to the network management server all reach the network management server from the master access network element.

In Step 5, when disconnection of the target network is Ping-detected on the master access network element, for example, 192.1.1.3 is disconnected, the master static routing is triggered to be deleted.

In Step 6, other network elements learn, through the OSPF protocol, that the master static routing is deleted, re-perform routing calculation and deletes the master static routing in the forwarding table.

In Step 7, the other network elements send the slave static routing to the forwarding table through the OSPF protocol.

In Step 8, the message traffics from the other network elements to the network management server are switched to the slave access network element.

In Step 9, when the master access network element Ping-detects that it is back to be normal, the master access network element configures the static routing to the forwarding table and retransmits to the OSPF protocol.

In Step 10, the other network elements relearn the master static routing, find the master static routing with a high priority and switch the communication traffics to the network management server to the master access network element.

### The fourth embodiment

The embodiment of the present invention provides a master access network element, which, as shown in FIG. 10, includes a first detection module 1010 and a first protection module 1020 a first protection module 1020.

The first detection module 1010 is configured to detect connectivity between the master access network element and a target network.

The first protection module 1020 is configured to, when the first detection module 1010 detects that the master access network element is not connected with the target network, invalidate a master static routing from the master access network element to a network management server and flood routing change situations.

In the embodiment, in the master access network element in accordance with the embodiment, the first detection module 1010 may further be configured to detect whether the connectivity between the master access network element and the target network is recovered; and the first protection module 1020 may further be configured to, when the first detection module 1010 detects that the connectivity between the master access network element and the target network is recovered, validate the master static routing from the master access network element to the network management server and flood the routing change situations.

The first detection module 1010 triggers the first protection module 1020 to validate the master static routing when detecting the recovery of the connectivity.

### The fifth embodiment

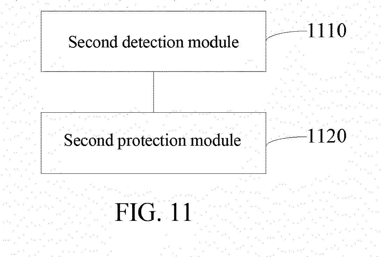

The embodiments of the present invention provides a network element, which, as shown in FIG. 11, includes a second detection module 1110 and a second protection module 1120.

The second detection module 1110 is configured to detect whether a master static routing from the master access network element to a network management server is invalidated.

The second protection module 1120 is configured to, when it is detected by the second detection module 1110 that the master static routing is invalid, re-perform routing calculation, and complete switching from the master static routing to a slave static routing; herein the slave static routing is routing information from the slave network element to the network management server learned by the network element in advance.

In the embodiment, in the network element in accordance with the embodiment, the second detection module 1110 may further be configured to detect whether the master static routing is recovered to be valid; and the second protection module 1120 may further be configured to, when the second detection module 1110 detects that the master static routing is recovered to be valid, re-perform routing calculation and complete switching from the slave static routing to the master static routing.

The second detection module 1110 triggers the second protection module 1120 to complete the switching from the master static routing to the slave static routing when detecting the invalidation of the master static routing; the second detection module 1110 triggers the second protection module 1120 to complete the switching from the slave static routing to the master static routing when detecting that the master static routing is recovered to be valid.

Various embodiments in the present specification are described in a progressive way, the same or similar parts between various embodiments only need to refer to each other, and what is highlighted in each embodiment is the difference between itself and other embodiments. In particular, since the apparatus embodiments are essentially similar to the method embodiments, the description for the apparatus embodiments are relatively simple, and relevant parts only need to refer to the description for the corresponding parts of the method embodiments.

In addition, an embodiment of the present invention further provides a computer readable storage medium having computer executable instructions stored therein, which, when executed, implement the method for protecting master and slave access network elements in a data communication network applied at the side of a master access network element.

In addition, an embodiment of the present invention further provides a computer readable storage medium having computer executable instructions stored therein, which, when executed, implement the method for protecting master and slave access network elements in a data communication network applied at the side of an internal network element.

People having ordinary skill in the art may understand that all or part of steps in the methods described above can be carried out by the related hardware (such as processors) through programs, which can be stored in a computer readable storage medium, such as an only read memory, a magnetic disk and an optical disk. Optionally, all or part of steps in the embodiments described above can be carried out using one or more integrated circuits. Accordingly, various modules/units in the embodiments can be implemented in the form of hardware, for example, by using an integrated circuit to implement their corresponding functions, or can be implemented in the form of a software function module, for example, by executing programs/instructions stored in a memory through a processor to implement their corresponding functions. The present application is not limited to the combination of any specific form of hardware and software.

### Industrial Applicability

The master-to-slave switching method in the scheme described above is independent of interaction between the master and slave access network elements without extra custom interfaces, and can ensure that the master access network element is used preferentially to communicate with the network management server after failure recovery of the master access network element, improving the stability of network management.

## Claims

1. A method for protecting master and slave access network elements in a data communication network, comprising:
detecting, by a master access network element, connectivity between the master access network element and a target network (S301); and
**characterized in that** the method further comprises:
when detecting that the master access network element is not connected with the target network, invalidating a master static routing from the master access network element to a network management server and flooding routing change situations (S302),
wherein invalidating the master static routing from the master access network element to the network management server comprises deleting the master static routing in a forwarding table maintained by the master access network element or setting a priority of the master static routing to be lower than a priority of a slave static routing from the slave access network element to the network management server.

2. The method according to claim 1, further comprising:
detecting, by the master access network element, whether the connectivity between the master access network element and the target network is recovered;
when detecting that the connectivity between the master access network element and the target network is recovered, validating the master static routing from the master access network element to the network management server and flooding the routing change situations.

3. The method according to claim 2, wherein
validating the master static routing from the master access network element to the network management server comprises reconfiguring the master static routing into the forwarding table or setting the priority of the master static routing in the forwarding table to be higher than the priority of the slave static routing.

4. The method according to claim 1 or 2 or 3, wherein
detecting, by the master access network element, the connectivity between the master access network element and the target network comprises detecting, by the master access network element, the connectivity between the master access network element and the target network through a preconfigured ping detection function.

5. A method for protecting master and slave access network elements in a data communication network, characterize by comprising:
detecting, by an internal network element of the data communication network, whether a master static routing from a master access network element to a network management server is invalidated (S401); and
when it is detected that the master static routing is invalidated, re-performing, by the internal network element, routing calculation, and completing switching from the master static routing to a slave static routing; wherein the slave static routing is routing information from the slave network element to the network management server learned by the internal network element in advance (S402),
wherein switching from the slave static routing to the master static routing comprises deleting the master static routing in a forwarding table maintained by the internal network element and configuring the slave static routing into the forwarding table of the internal network element.

6. The method according to claim 5, further comprising:
when the internal network element detects that the master static routing is recovered to be valid, re-performing routing calculation and completing switching from the slave static routing to the master static routing.

7. The method according to claim 6, wherein
switching from the master static routing to the slave static routing comprises deleting the slave static routing in the forwarding table maintained by the internal network element and configuring the master static routing into the forwarding table.

8. A master access network element, comprising:
a first detection module (1010) configured to detect connectivity between the master access network element and a target network; and
**characterized in that** the master access network element further comprises:
a first protection module (1020) configured to, when the first detection module detects that the master access network element is not connected with the target network, invalidate a master static routing from the master access network element to a network management server and flood routing change situations,
wherein invalidating the master static routing from the master access network element to the network management server comprises deleting the master static routing in a forwarding table maintained by the master access network element or setting a priority of the master static routing to be lower than a priority of a slave static routing from the slave access network element to the network management server.

9. The master access network element according to claim 8, wherein
the first detection module is further configured to detect whether the connectivity between the master access network element and the target network is recovered; and
the first protection module is further configured to, when the first detection module detects that the connectivity between the master access network element and the target network is recovered, validate the master static routing from the master access network element to the network management server and flood the routing change situations.

10. A network element, characterize by comprising:
a second detection module (1110) configured to detect whether a master static routing from a master access network element to a network management server is invalidated; and
a second protection module (1120) configured to, when the second detection module detects that the master static routing is invalidated, re-perform routing calculation, and complete switching from the master static routing to a slave static routing; wherein the slave static routing is routing information from the slave network element to the network management server learned by the network element in advance,
wherein switching from the slave static routing to the master static routing comprises deleting the master static routing in a forwarding table maintained by the internal network element and configuring the slave static routing into the forwarding table of the internal network element.

11. The network element according to claim 10, wherein
the second detection module is further configured to detect whether the master static routing is recovered to be valid; and
the second protection module is further configured to, when the second detection module detects that the master static routing is recovered to be valid, re-perform routing calculation and complete switching from the slave static routing to the master static routing.

12. A computer readable storage medium having computer executable instructions stored therein, which, when executed, implement the method according to any one of claims 1-4.

13. A computer readable storage medium having computer executable instructions stored therein, which, when executed, implement the method according to any one of claims 5-7.

## Patentansprüche

1. Verfahren zum Schützen von Master- und Slave-Zugangsnetzelementen in einem Datenkommunikationsnetzwerk, umfassend:
Erkennen, durch ein Master-Zugangsnetzelement, von Konnektivität zwischen dem Master-Zugangsnetzelement und einem Ziel-Netzwerk (S301); und
**dadurch gekennzeichnet, dass** das Verfahren ferner umfasst:
wenn es erkannt wird, dass das Master-Zugangsnetzelement mit dem Ziel-Netzwerk nicht verbunden ist, Invalidieren eines statischen Routings des Masters vom Master-Zugangsnetzelement an einen Netzwerkverwaltungsserver und Überfluten der Routingänderungssituationen (S302),
worin das Invalidieren eines statischen Routings des Masters vom Master-Zugangsnetzelement an den Netzwerkverwaltungsserver das Löschen des statischen Routings des Masters in einer Weiterleitungstabelle, die vom Master-Zugangsnetzelement geführt wird, oder das Setzen einer Priorität des statischen Routings des Masters umfasst, damit sie niedriger ist als eine Priorität eines statischen Routings des Slaves vom Slave-Zugangsnetzelement an den Netzwerkverwaltungsserver.

2. Verfahren nach Anspruch 1, ferner umfassend:
Erkennen, durch das Master-Zugangsnetzelement, ob die Konnektivität zwischen dem Master-Zugangsnetzelement und dem Ziel-Netzwerk wiederhergestellt ist;
wenn es erkannt wird, dass die Konnektivität zwischen dem Master-Zugangsnetzelement und dem Ziel-Netzwerk wiederhergestellt ist, Validieren des statischen Routings des Masters vom Master-Zugangsnetzelement an den Netzwerkverwaltungsserver und Überfluten der Routingänderungssituationen.

3. Verfahren nach Anspruch 2, worin
das Validieren des statischen Routings des Masters vom Master-Zugangsnetzelement an den Netzwerkverwaltungsserver das Neukonfigurieren des statischen Routings des Masters in die Weiterleitungstabelle hinein oder das Setzen der Priorität des statischen Routings des Masters in der Weiterleitungstabelle umfasst, damit sie höher ist als die Priorität des statischen Routings des Slaves.

4. Verfahren nach Anspruch 1 oder 2 oder 3, worin
das Erkennen, durch das Master-Zugangsnetzelement, der Konnektivität zwischen dem Master-Zugangsnetzelement und dem Ziel-Netzwerk das Erkennen, durch das Master-Zugangsnetzelement, der Konnektivität zwischen dem Master-Zugangsnetzelement und dem Ziel-Netzwerk durch eine vorkonfigurierte Ping-Erkennungsfunktion umfasst.

5. Verfahren zum Schützen von Master- und Slave-Zugangsnetzelementen in einem Datenkommunikationsnetzwerk, **dadurch gekennzeichnet, dass** es umfasst:
Erkennen, durch ein internes Netzelement des Datenkommunikationsnetzwerkes, ob ein statisches Routing des Masters von einem Master-Zugangsnetzelement an einen Netzwerkverwaltungsserver invalidiert ist (S401); und
wenn es erkannt wird, dass das statische Routing des Masters invalidiert ist, Wieder-Durchführen, durch das interne Netzelement, von Routing-Berechnung, und Vollenden der Umschaltung vom statischen Routing des Masters zu einem statischen Routing des Slaves; worin das statische Routing des Slaves Routing-Informationen vom Slave-Netzelement zum Netzwerkverwaltungsserver sind, die vom internen Netzelement im Voraus gelernt werden (S402),
worin das Umschalten vom statischen Routing des Slaves zum statischen Routing des Masters das Löschen des statischen Routings des Masters in einer Weiterleitungstabelle, die vom internen Netzelement geführt wird, und das Konfigurieren des statischen Routings des Slaves in die Weiterleitungstabelle des internen Netzelementes hinein umfasst.

6. Verfahren nach Anspruch 5, ferner umfassend:
wenn das interne Netzelement erkennt, dass das statische Routing des Masters wiederhergestellt wird, damit es gültig ist, Wieder-Durchführen von Routing-Berechnung und Vollenden der Umschaltung vom statischen Routing des Slaves zum statischen Routing des Masters.

7. Verfahren nach Anspruch 6, worin
das Umschalten vom statischen Routing des Masters zum statischen Routing des Slaves das Löschen des statischen Routings des Slaves in der Weiterleitungstabelle, die vom internen Netzelement geführt wird, und das Konfigurieren des statischen Routings des Masters in die Weiterleitungstabelle hinein umfasst.

8. Master-Zugangsnetzelement, umfassend:
ein erstes Erkennungsmodul (1010), das dafür ausgelegt ist, die Konnektivität zwischen dem Master-Zugangsnetzelement und einem Ziel-Netzwerk zu erkennen; und
**dadurch gekennzeichnet, dass** das Master-Zugangsnetzelement ferner umfasst:
ein erstes Schutzmodul (1020), das dafür ausgelegt ist, wenn das erste Erkennungsmodul erkennt, dass das Master-Zugangsnetzelement mit dem Ziel-Netzwerk nicht verbunden ist, ein statisches Routing des Masters vom Master-Zugangsnetzelement an einen Netzwerkverwaltungsserver zu invalidieren und Routingänderungssituationen zu überfluten,
worin das Invalidieren des statischen Routings des Masters vom Master-Zugangsnetzelement an den Netzwerkverwaltungsserver das Löschen des statischen Routings des Masters in einer Weiterleitungstabelle, die vom Master-Zugangsnetzelement geführt wird, oder das Setzen einer Priorität des statischen Routings des Masters umfasst, damit sie niedriger ist als eine Priorität eines statischen Routings des Slaves vom Slave-Zugangsnetzelement an den Netzwerkverwaltungsserver.

9. Master-Zugangsnetzelement nach Anspruch 8, worin
das erste Erkennungsmodul ferner dafür ausgelegt ist, zu erkennen, ob die Konnektivität zwischen dem Master-Zugangsnetzelement und dem Ziel-Netzwerk wiederhergestellt ist; und
das erste Schutzmodul ferner dafür ausgelegt ist, wenn das erste Erkennungsmodul erkennt, dass die Konnektivität zwischen dem Master-Zugangsnetzelement und dem Ziel-Netzwerk wiederhergestellt ist, das statische Routing des Masters vom Master-Zugangsnetzelement an den Netzwerkverwaltungsserver zu validieren und die Routingänderungssituationen zu überfluten.

10. Netzelement, **dadurch gekennzeichnet, dass** es umfasst:
ein zweites Erkennungsmodul (1110), das dafür ausgelegt ist, zu erkennen, ob ein statisches Routing des Masters von einem Master-Zugangsnetzelement an einen Netzwerkverwaltungsserver invalidiert ist; und
ein zweites Schutzmodul (1120), das dafür ausgelegt ist, wenn das zweite Erkennungsmodul erkennt, dass das statische Routing des Masters invalidiert ist, Routing-Berechnung wieder durchzuführen und das Umschalten vom statischen Routing des Masters zu einem statischen Routing des Slaves zu vollenden; worin das statische Routing des Slaves Routing-Informationen vom Slave-Netzelement zum Netzwerkverwaltungsserver sind, die vom internen Netzelement im Voraus gelernt werden,
worin das Umschalten vom statischen Routing des Slaves zum statischen Routing des Masters das Löschen des statischen Routings des Masters in einer Weiterleitungstabelle, die vom internen Netzelement geführt wird, und das Konfigurieren des statischen Routings des Slaves in die Weiterleitungstabelle des internen Netzelementes hinein umfasst.

11. Netzelement nach Anspruch 10, worin
das zweite Erkennungsmodul ferner dafür ausgelegt ist, zu erkennen, ob das statische Routing des Masters wiederhergestellt wird, damit es gültig ist; und
das zweite Schutzmodul ferner dafür ausgelegt ist, wenn das zweite Erkennungsmodul erkennt, dass das statische Routing des Masters wiederhergestellt wird, damit es gültig ist, die Routing-Berechnung wieder durchzuführen und die Umschaltung vom statischen Routing des Slaves zum statischen Routing des Masters zu vollenden.

12. Computerlesbares Speichermedium, das vom Computer ausführbare Anweisungen enthält, die darin gespeichert sind, die, wenn sie ausgeführt werden, das Verfahren nach einem der Ansprüche 1-4 implementieren.

13. Computerlesbares Speichermedium, das vom Computer ausführbare Anweisungen enthält, die darin gespeichert sind, die, wenn sie ausgeführt werden, das Verfahren nach einem der Ansprüche 5-7 implementieren.

## Revendications

1. Procédé de protection d'éléments de réseau d'accès principal et secondaire dans un réseau de communication de données, comprenant :
la détection, par un élément de réseau d'accès principal, de la connectivité entre l'élément de réseau d'accès principal et un réseau cible (S301) ; et
**caractérisé en ce que** ledit procédé comprend en outre :
lors de la détection que l'élément de réseau d'accès principal n'est pas connecté au réseau cible, l'invalidation d'un routage statique principal de l'élément de réseau d'accès principal à un serveur de gestion de réseau et l'inondation de situations de changement de routage (S302),
où l'invalidation du routage statique principal de l'élément de réseau d'accès principal au serveur de gestion de réseau comprend la suppression du routage statique principal dans une table d'acheminement maintenue par l'élément de réseau d'accès principal ou l'établissement d'une priorité du routage statique principal pour qu'elle soit inférieure à une priorité d'un routage statique secondaire de l'élément de réseau d'accès secondaire au serveur de gestion de réseau.

2. Procédé selon la revendication 1, comprenant en outre :
la détection, par l'élément de réseau d'accès principal, si la connectivité entre l'élément de réseau d'accès principal et le réseau cible est récupérée ;
lors de la détection de la récupération de la connectivité entre l'élément de réseau d'accès principal et le réseau cible, la validation du routage statique principal de l'élément de réseau d'accès principal au serveur de gestion de réseau et l'inondation de situations de changement de routage.

3. Procédé selon la revendication 2, où
la validation du routage statique principal de l'élément de réseau d'accès principal au serveur de gestion de réseau comprend la reconfiguration du routage statique principal dans la table d'acheminement ou l'établissement de la priorité du routage statique principal dans la table d'acheminement pour qu'elle soit supérieure à la priorité du routage statique secondaire.

4. Procédé selon la revendication 1 ou 2 ou 3, où
la détection, par l'élément de réseau d'accès principal, de la connectivité entre l'élément de réseau d'accès principal et le réseau cible comprend la détection, par l'élément de réseau d'accès principal, de la connectivité entre l'élément de réseau d'accès principal et le réseau cible au moyen d'une fonction de détection ping préconfigurée.

5. Procédé pour protéger des éléments de réseau d'accès principal et secondaire dans un réseau de communication de données, **caractérisé en ce qu'**il comprend :
la détection, par un élément de réseau interne du réseau de communication de données, si un routage statique principal d'un élément de réseau d'accès principal à un serveur de gestion de réseau est invalidé (S401) ; et
lorsqu'il est détecté que le routage statique principal est invalidé, la réexécution, par l'élément de réseau interne, d'un calcul de routage, et l'achèvement de la commutation du routage statique principal à un routage statique secondaire ; où le routage statique secondaire achemine des informations de l'élément de réseau secondaire au serveur de gestion de réseau appris à l'avance par l'élément de réseau interne (S402),
où la commutation du routage statique secondaire au routage statique principal comprend la suppression du routage statique principal dans une table d'acheminement maintenue par l'élément de réseau interne et la configuration du routage statique secondaire dans la table d'acheminement de l'élément de réseau interne.

6. Procédé selon la revendication 5, comprenant en outre :
lorsque l'élément de réseau interne détecte que le routage statique principal est récupéré pour être valide, la réexécution d'un calcul de routage et l'achèvement de la commutation du routage statique secondaire au routage statique principal.

7. Procédé selon la revendication 6, où
la commutation du routage statique principal au routage statique secondaire comprend la suppression du routage statique secondaire dans la table d'acheminement maintenue par l'élément de réseau interne et la configuration du routage statique principal dans la table d'acheminement.

8. Élément de réseau d'accès principal, comprenant :
un premier module de détection (1010) configuré pour détecter la connectivité entre l'élément de réseau d'accès principal et un réseau cible ; et
**caractérisé en ce que** l'élément de réseau d'accès principal comprend en outre :
un premier module de protection (1020) configuré pour, lorsque le premier module de détection détecte que l'élément de réseau d'accès principal n'est pas connecté au réseau cible, invalider un routage statique principal de l'élément de réseau d'accès principal à un serveur de gestion de réseau et inonder des situations de changement de routage,
où l'invalidation du routage statique principal de l'élément de réseau d'accès principal au serveur de gestion de réseau comprend la suppression du routage statique principal dans une table d'acheminement maintenue par l'élément de réseau d'accès principal ou l'établissement d'une priorité du routage statique principal pour qu'elle soit inférieure à une priorité d'un routage statique secondaire de l'élément de réseau d'accès secondaire au serveur de gestion de réseau.

9. Élément de réseau d'accès principal selon la revendication 8, où
le premier module de détection est en outre configuré pour détecter si la connectivité entre l'élément de réseau d'accès principal et le réseau cible est récupérée ; et
le premier module de protection est en outre configuré pour, lorsque le premier module de détection détecte que la connectivité entre l'élément de réseau d'accès principal et le réseau cible est récupérée, valider le routage statique principal de l'élément de réseau d'accès principal au serveur de gestion de réseau et inonder les situations de changement de routage.

10. Élément de réseau, **caractérisé en ce qu'**il comprend :
un second module de détection (1110) configuré pour détecter si un routage statique principal d'un élément de réseau d'accès principal à un serveur de gestion de réseau est invalidé ; et
un second module de protection (1120) configuré pour, lorsque le second module de détection détecte que le routage statique principal est invalidé, réexécuter le calcul de routage, et achever la commutation du routage statique principal à un routage statique secondaire ; où le routage statique secondaire achemine des informations de l'élément de réseau secondaire au serveur de gestion de réseau appris à l'avance par l'élément de réseau,
où la commutation du routage statique secondaire au routage statique principal comprend la suppression du routage statique principal dans une table d'acheminement maintenue par l'élément de réseau interne et la configuration du routage statique secondaire dans la table d'acheminement de l'élément de réseau interne.

11. Élément de réseau selon la revendication 10, où
le second module de détection est en outre configuré pour détecter si le routage statique principal est récupéré pour être valide ; et
le second module de protection est en outre configuré pour, lorsque le second module de détection détecte que le routage statique principal est récupéré pour être valide, réexécuter un calcul de routage et achever la commutation du routage statique secondaire au routage statique principal.

12. Support de stockage lisible par ordinateur ayant des instructions exécutables par ordinateur stockées dans celui-ci, qui, lorsqu'elles sont exécutées, mettent en œuvre le procédé selon l'une quelconque des revendications 1 à 4.

13. Support de stockage lisible par ordinateur ayant des instructions exécutables par ordinateur stockées dans celui-ci, qui, lorsqu'elles sont exécutées, mettent en œuvre le procédé selon l'une quelconque des revendications 5 à 7.
